(19) Europäisches Patentamt European Patent Office Office européen des brevets

(11) **EP 4 517 895 A2**

(12) **EUROPEAN PATENT APPLICATION**

(43) Date of publication:
05.03.2025  Bulletin 2025/10

(21) Application number: 24196791.8

(22) Date of filing: 27.08.2024

(51) International Patent Classification (IPC):
*H01M 10/04* (2006.01)    *H01M 50/102* (2021.01)
*H01M 50/107* (2021.01)    *H01M 50/112* (2021.01)
*H01M 50/131* (2021.01)    *H01M 50/143* (2021.01)
*H01M 50/342* (2021.01)    *H01M 50/538* (2021.01)

(52) Cooperative Patent Classification (CPC):
H01M 50/538; H01M 10/0431; H01M 50/102;
H01M 50/107; H01M 50/112; H01M 50/131;
H01M 50/143; H01M 50/3425

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  31.08.2023  CN 202322371131 U

(71) Applicant: **Eve Power Co., Ltd.**
**Jingmen, Hubei 448000 (CN)**

(72) Inventors:
• **MIN, Changfei**
  **Jingmen, Hubei, Jingmen, Hubei (CN)**
• **LI, Shangyi**
  **Jingmen, Hubei (CN)**

(74) Representative: **Herrero & Asociados, S.L.**
**Edificio Aqua - Agustín de Foxá, 4-10
28036 Madrid (ES)**

(54)  **BATTERY AND BATTERY PACK**

(57)  A battery includes: at least two jellyrolls (1); and a case (2). The at least two jellyrolls are disposed in the case, the case is arranged with at least two extension portions around a central axis of the case, and the at least two extension portions are communicated with each other. Each of the at least two extension portions is filled by a respective one of the at least two jellyrolls; the number of the at least two extension portions is equal to the number of the at least two jellyrolls.

FIG. 1

EP 4 517 895 A2

## Description

## TECHNICAL FIELD

The present disclosure relates to the field of batteries, and in particular to a battery and a battery pack.

## BACKGROUND

For a power battery pack in the art, a plurality of individual batteries are power-connected to each other by an external power connector to form a battery module, and subsequently, the battery is further assembled to form a battery pack.

A frame and a structural component, which is used to form the individual batteries into the battery module, has a certain mechanical strength and supports, fixes and protects each cell. However, a large number of mounting structures are used for forming the battery module and the battery pack, and therefore, costs of the battery pack are higher, and an overall weight of the battery pack is increased. On the other hand, the mounting structures occupy more spaces, resulting the power battery pack having a reduced capacity for each cell, such that an energy density is lower.

## SUMMARY

To solve the above technical problem, the present application disclose provides a battery and a battery pack that are capable of increasing the number and capacities of cells and effectively increasing the battery energy density.

In a first aspect, the present disclosure provides a battery, including: at least two jellyrolls; and a case. The at least two jellyrolls are disposed in the case, the case is arranged with at least two extension portions around a central axis of the case, and the at least two extension portions are communicated with each other. Each of the at least two extension portions is filled by a respective one of the at least two jellyrolls; the number of the at least two extension portions is equal to the number of the at least two jellyrolls.

In this way, one case is filled with the plurality of jellyrolls. One case can protect the plurality of jellyrolls, effectively improving the battery energy density and reducing the number of structural components.

In some embodiments, the number of the at least two extension portions is 2 to 6.

In some embodiments, the case includes a case body and an upper cover; the case body is arranged with the at least two extension portions; the upper cover is disposed at an end surface of each jellyroll.

In some embodiments, the battery further includes two current collector plates arranged inside the case. A plane on which an end face of each of the two current collector plates is located is parallel to a plane on which an end face of the upper cover is located.

The two current collector plates are a first current collector plate and a second current collector plate; the first current collector plate is disposed at an end of the jellyroll and is welded to a tab arranged on the end of the jellyroll, and the second current collector plate is disposed at the other end of the jellyroll and is welded to another tab arranged on the other end of the jellyroll.

In some embodiments, a pole is arranged on the upper cover; one of the two current collector plates that is disposed near the upper cover is welded to the pole.

In some embodiments, the one of the two current collector plates disposed near the upper cover is arranged with a protrusion, protruding towards the pole; and the protrusion is welded with the pole.

In some embodiments, one of the two current collector plates disposed away from the upper cover has a vertical edge; and the vertical edge is welded with a side wall of the case body.

In some embodiments, a length H of the vertical edge is in a range of $0.5mm \leq H \leq 2mm$.

In some embodiments, a thickness T of the protrusion is in a range of $0.1\ mm \leq T \leq 0.6\ mm$.

In some embodiments, the at least two jellyrolls that are disposed in one case are connected to each other in parallel.

In some embodiments, the battery further includes a cap. The case body has two openings at two ends thereof, respectively. The cap covers a side of the case body away from the upper cover and covers a respective one of the two openings; the first current collector plate is disposed near the upper cover; the second current collector plate is disposed near the cap; a side of the cap facing towards the second current collector plate is arranged with a reinforcing rib; the reinforcing rib at least partially abuts against the second current collector plate.

In some embodiments, a gap is defined between the second current collector plate and a portion of the cap that is not arranged with the reinforcing rib; and a distance D of the gap is in a range of $0.2\ mm \leq D \leq 0.7\ mm$.

In some embodiments, a side of the cap away from the second current collector plate is arranged with an explosion-proof mark.

In some embodiments, a thickness of a portion of the cap arranged with the explosion-proof mark is in a range of 0.05mm to 0.12mm.

In a second aspect, the present disclosure provides a battery pack, including a plurality of batteries, wherein, each of the plurality of batteries is the battery as described in the above aspect.

In some embodiments, the plurality of batteries are arranged in a plurality of columns, and batteries in adjacent two columns of the plurality of columns are spaced apart from each other.

According to the above technical solutions, following technical effects can be achieved.

1) The plurality of jellyrolls 1 are filled in one case. The one case can protect the plurality of jellyrolls 1. Therefore, the energy density of the battery is effectively increased, and the number of structural components is reduced.

2) The plurality of batteries are directly assembled to form the battery pack. The plurality of batteries do not need to form a battery module before being assembled to form the battery pack. Therefore, a space for arranging the batteries is saved, and the energy of the battery pack is improved.

3) The case is arranged with 2 to 6 extension portions. Therefore, the surface heat-dissipation area of the battery is increased, facilitating the thermal control and management of the battery pack.

## BRIEF DESCRIPTION OF THE DRAWINGS

FIG. 1 is an exploded view of a battery according to some embodiments of the present disclosure.
FIG. 2 is an exploded view of a case according to some embodiments of the present disclosure.
FIG. 3 is a top view of the case according to some embodiments of the present disclosure.
FIG. 4 is a cross-sectional view of the battery according to some embodiments of the present disclosure.
FIG. 5 is a perspective view of a cap according to some embodiments of the present disclosure.
FIG. 6 is a schematic view of welding imprints of a first current collector plate and a jellyroll according to some embodiments of the present disclosure.
FIG. 7 is a schematic view of welding the first current collector plate according to some embodiments of the present disclosure.
FIG. 8 is a schematic view of welding a second current collector plate according to some embodiments of the present disclosure.
FIG. 9 is a top view of arrangement of batteries according to some embodiments of the present disclosure.
FIG. 10 is a top view of arrangement in a battery pack according to some embodiments of the present disclosure.
FIG. 11 is a perspective of the structure shown in FIG. 9.

Reference numerals in drawings:

1-jellyroll; 2-case; 21-case body; 22-upper cover; 23-inner sealing ring; 24-outer sealing ring; 25-pole; 3-first current collector plate; 4-insulating gasket; 5-second current collector plate; 6-cap; 61-reinforcing rib; 62-fluid-injection hole; 63-explosion-proof mark; 7-pole sealing nail; 8-cap sealing nail; 100-first integrator; 110-first extension portion; 200-second integrator; 210-second extension portion; 300-third integrator; 310-third extension portion; 400-fourth integrator.

## DETAILED DESCRIPTION

For better understanding and implementation, technical solutions in the embodiments of the present disclosure will be clearly and completely described below by referring to the accompanying drawings in the embodiments of the present disclosure.

In the description of the present disclosure, to be noted that the terms "up", "down", "front", "rear", "left", "right", "vertical", "horizontal", "top", "bottom", "inside", "outside", and so on, indicate an orientation or positional relationship based on what is shown in the accompanying drawings. The terms are used to facilitate and simplify description of the present disclosure but do not indicate or imply that devices or elements must be arranged in a particular orientation or constructed and operated in a particular orientation. Therefore, the terms shall not be interpreted as limiting the scope of the present disclosure.

In the description of the present disclosure, unless otherwise expressly provided and limited, terms "first" and "second" are used for descriptive purposes only and shall not be interpreted as indicating or implying relative importance. The term "more than one" refers to two or more. The term "and/or" includes any and all combinations of one or more listed associated items. In particular, references to "the/ said" object or "an" object are equivalently intended to indicate one of a plurality of such objects.

Unless otherwise defined, all technical and scientific terms used herein have the same meaning as commonly understood by any ordinary skilled person in the art. Terms used in the specification of the present disclosure are used only for the purpose of describing specific embodiments and shall not limit the present disclosure. The terms "include", "have ", and any variations thereof in the specification, claims, and drawings of the present disclosure are intended to cover non-exclusive inclusion.

Further, in the description of the present disclosure, to be understood that, orientation terms, such as "up", "down", "inside", "outside", and so on are described based on what is shown in the accompanying drawings and shall not be understood as limiting the specific embodiment. To be further understood that, in the context, when an element or a feature is arranged "above", "under", or "inside ", "outside" of another element(s), it means that the element or the feature is directly or indirectly, via an intermediate, connected "above", "under ", or "inside", "outside" the another element(s).

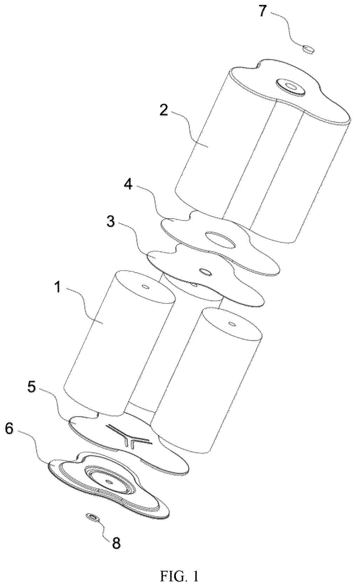

As shown in FIG. 1, the present disclosure provides a battery including a jellyroll 1 and a case 2. The jellyroll 1 is a cylindrical jellyroll 1 and is disposed in the case 2. The case 2 is arranged with at least two extension portions around a central axis of the case. Each extension portion is filled by one jellyroll 1. The number of extension portions is equal to the number of jellyrolls 1. Since a plurality of jellyrolls 1 are filled in the case 2, one case 2 protects the plurality of jellyrolls 1. Therefore, arranging one case 2 for each jellyroll 1 is not required, materials required to manufacture the case 2 are reduced, a weight of one battery is reduced. In addition, an energy density of the battery is effectively increased, the number of structural components is reduced. Since a plurality of extension portions are arranged, a surface heat-dissipation area of the battery is increased, facilitating thermal control and management of the battery pack.

In some embodiments, the number of the at least two extension portions is 2 to 6, and in the present embodiment, the battery is arranged with 3 extension portions and will be illustrated in the following.

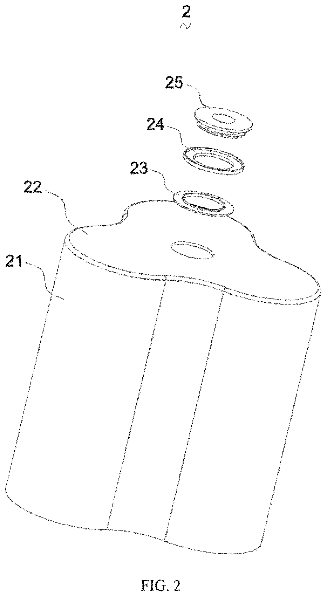

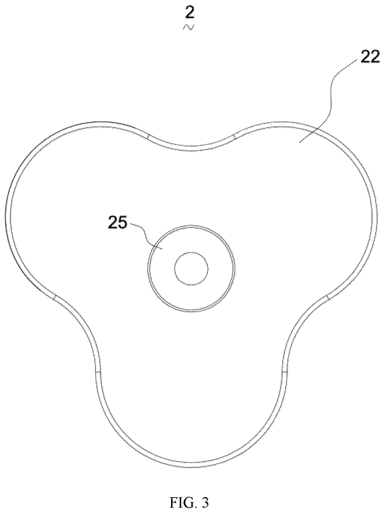

Further, the battery of the present embodiment further includes two current collector plates arranged inside the case 2. The two current collector plates are a first current collector plate 3 and a second current collector plate 5. It is known from the above that the jellyroll 1 is the cylindrical jellyroll. The first current collector plate 3 is welded to a tab leading out from a circular end surface of the jellyroll 1, and the second current collector plate 5 is welded to another tab leading out from the other circular end surface of the jellyroll 1. Further as shown in FIGS. 2 and 3, the case 2 includes a case body 21, an upper cover 22, an inner sealing ring 23, an outer sealing ring 24, and a pole 25. The case body 21 and the upper cover 22 are integrally molded as a one-piece structure. The case body 21 has two openings at two ends, respectively. The case body 21 has three extension portions. The upper cover 22 covers the end surface of the jellyroll 1. One of the first current collector plate 3 and the second current collector plate 5 is disposed in a semi-enclosed region formed by the case body 21 and the upper cover 22, and the other one of the first current collector plate 3 and the second current collector plate 5 is disposed at the end of the case body away from the upper cover 22. The pole 25 is arranged on the upper cover 22. Specifically, the first current collector plate 3 is disposed near the upper cover 22, and the second current collector plate 5 is welded to the other end of the jellyroll 1. The first current collector plate 3 and the second current collector plate 5 are respectively welded to two tabs of the jellyroll 1. The first current collector plate 3 is arranged with a protrusion (not shown in the drawings) protruding towards the pole 25. A thickness of the protrusion is T and is in a range of $0.1\,mm \leq T \leq 0.6\,mm$. In this way, the pole 25 and the first current collector plate 3 can be welded to each other easily. An insulating gasket 4 is arranged between the upper cover 22 and the first current collector plate 3. A cap 6 is arranged at a bottom of the second current collector plate 6. The cap 6 is welded to the case 2.

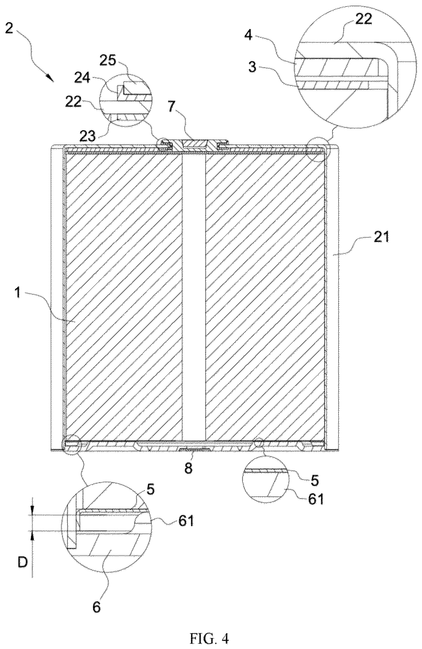

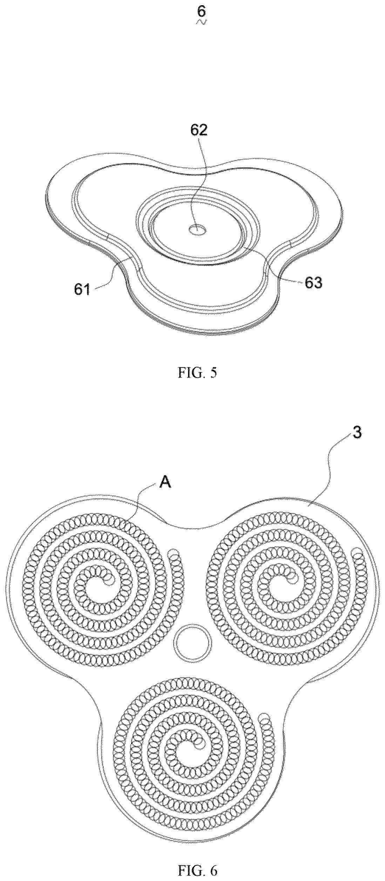

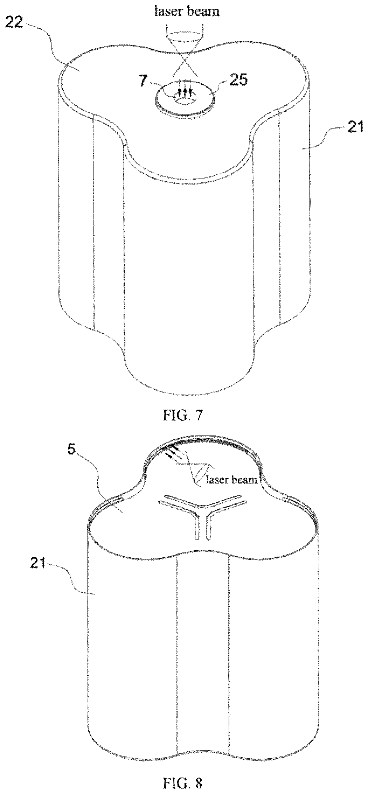

As shown in FIGS. 3 to 6, the case 2 in the present embodiment is arranged with three extension portions. The three extension portions are extending outwardly to form a petal shape. A shape of the first current collector plate 3 and/or the second current collector plate 5 is the same as a shape of the upper cover 22. FIG. 6 shows welding imprints between the first current collector plate 3 and the jellyroll 1 of the present embodiment. A portion A in FIG. 6 is a welding trace to ensure that the first current collector plate 3 is welded to each of three jellyrolls 1. After the first current collector plate 3 is welded to the three jellyrolls 1, the first current collector plate 3 and the jellyrolls 1 are partially wrapped by a spacer adhesive paper, preventing the tab from touching, due to being flipped, the case 2, where the touching may result in a short circuit of the battery. Furthermore, the insulating gasket 4 is arranged inside the case 2 and is disposed between the upper cover 22 and the first current collector plate 3. The first current collector plate 3 and the jellyrolls 1 that are wrapped by the spacer adhesive paper are placed inside the case 2. A laser is applied to weld the pole 25 with to the protrusion of the first current collector plate 3. A welding direction is shown in FIG. 7. The pole 25 is enabled to be conductive to a circuit of the first current collector plate 3, and then a pole sealing nail 7 is welded with the pole 25. A terminal side sealing is achieved. Specifically, the inner sealing ring 23 and the outer sealing ring 24 are respectively arranged at two sides of the pole 25, further enhancing a sealing performance of the pole 25. The second current collector plate 5 has a vertical edge. The vertical edge is welded with a side wall of the case body 21 by a laser beam, and a welding direction thereof is shown in FIG. 8. A length of the vertical edge is H in a range of $0.5mm \leq H \leq 2mm$. Since the second current collector plate 5 and the case 2 are welded to each other, the case 2 is charged, and a conductive circuit is formed. The second current collector plate 5 and the cap 6 are not welded to each other, such that a conductive line is reduced, and a battery internal resistance is reduced. The battery in the present embodiment further includes the cap 6. The case body 21 defines two openings respectively at the two ends. The cap 6 covers the side of the case body 21 away from the upper cover 22 and covers one of the two openings. Peripheries of the cap 6 and the case 2 are welded to each other. The cap 6 defines a fluid-injection hole. Fluid, helium, and sealing adhesive particles are injected to an interior of the case 2 through the fluid-injection hole. A cap sealing nail 8 is then welded to completely seal the battery.

Specifically, as shown in FIG. 5, the second current collector plate 5 is disposed near the cap 6. A side of the cap 6 facing the second current collector plate 5 is arranged with a reinforcing rib 61. At least a portion of the reinforcing rib 61 abuts against the second current collector plate 5 to compress the jellyroll 1 to prevent the jellyroll 1 from shaking. A portion of the cap 6 that is not arranged with any reinforcing rib 61 is spaced apart from the second current collector plate 5, i.e., a gap is defined therebetween. As shown in FIG. 2, the gap is D in a range of $0.2mm \leq D \leq 0.7mm$. The cap 6 is dis-conductive with the jellyroll 1 to reduce the conductive line and reduce the internal resistance of the battery.

In an embodiment, the cap 6 is further arranged with an explosion-proof mark 63. The explosion-proof mark 63 is located at the bottom of the case 2. In the present embodiment, a thickness of a portion of the cap 6 arranged with the explosion-proof mark 63 is in a range of 0.05mm-0.12mm, such that the battery is ensured to be used safely.

According to the above, the side of the case where the pole 25 is located serves as an output region, and the side of the case where the cap 6 is located serves as a functional region. In this way, standardization of design and assembly is achieved, and mass manufacturing can be performed easily.

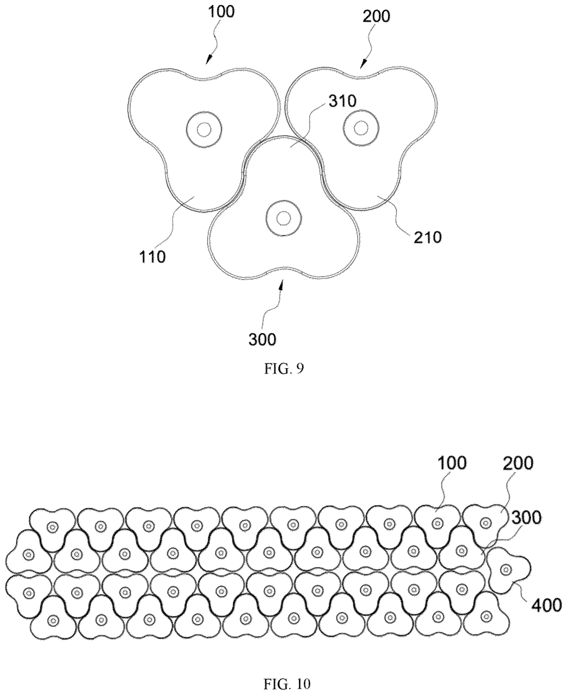

In another embodiment, the present disclosure further provides a battery pack including a plurally of batteries as described above. The plurally of batteries are directly assembled to each other to form the battery pack. The plurally of batteries do not need to form a battery module before being assembled into the battery pack. In this way, a space for arranging the batteries is saved, and energy of the battery pack is greatly enhanced. The plurality of batteries are arranged into a plurality of columns. Batteries that are located at ends of two adjacent columns are spaced apart from each other. As shown in FIG. 9, FIG. 9 show three batteries having a same shape and a same size with each other. Each battery is arranged with three extension portions. The three batteries are denoted as a first integrator 100, a second integrator 200, and a third integrator 300, respectively. The first integrator 100 and the second integrator 200 are disposed in a same column. The third integrator 300 is embedded between the first integrator 100 and the second integrator 200. The first integrator 100 is arranged with a first extension portion 110, the second integrator 200 is arranged with a second extension portion 210. A gap is defined between the first extension portion 110 and the second extension portion 210. The third integrator 300 is arranged with a third extension portion 310. The third extension portion 310 is received in the gap between the first extension portion 110 and the second extension portion 210. Two sides of the third extension portion 310 respectively abut against the first integrator and the second integrator 200.

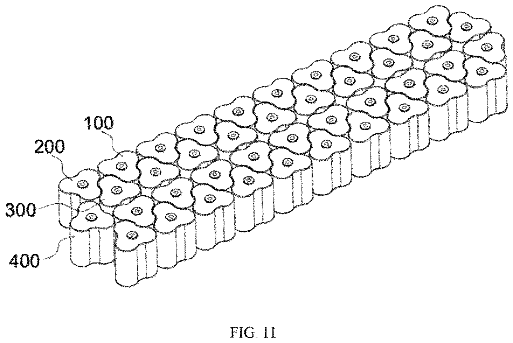

Specifically, as shown in FIGS. 10 and 11, when a plurality of columns of batteries are arranged and a plurality of integrators are arranged in each column, the arrangement in FIG. 9 is also applicable to FIGS. 10 and 11 and will not be repeatedly described herein. In FIGS. 10 and 11, the battery pack further includes a fourth integrator 400. The fourth integrator 400 is disposed at an end of the column. Two extension portions of the fourth integrator 400 respectively abut against two extension portions of two third integrators 300 that are disposed symmetrical to each other. In this way, a space utilization rate is increased.

In summary, the present disclosure provides a battery and a battery pack having at least the following technical effects.

The plurality of jellyrolls 1 are filled in one case 2. The one case 2 can protect the plurality of jellyrolls 1. Therefore, the energy density of the battery is effectively increased, and the number of structural components is reduced.

The plurality of batteries are directly assembled to form the battery pack. The plurality of batteries do not need to form a battery module before being assembled to form the battery pack. Therefore, a space for arranging the batteries is saved, and the energy of the battery pack is improved.

The case 2 is arranged with 2 to 6 extension portions. Therefore, the surface heat-dissipation area of the battery is increased, facilitating the thermal control and management of the battery pack.

Technical solutions disclosed in the present disclosure are not limited to the those described in the above embodiments, but further include technical solutions formed by combination of any of the above technical features. To be noted that, any ordinary skilled person in the art may perform various improvements and embellishments without departing from principles of the present disclosure, and the improvements and embellishments shall be included in the scope of the present disclosure.

**Claims**

1. A battery, **characterized by** comprising:

   at least two jellyrolls (1);
   a case (2), wherein, the at least two jellyrolls (1) are disposed in the case (2), the case (2) is arranged with at least two extension portions around a central axis of the case (2), and the at least two extension portions are communicated with each other;
   wherein, each of the at least two extension portions is filled by a respective one of the at least two jellyrolls (1); the number of the at least two extension portions is equal to the number of the at least two jellyrolls (1).

2. The battery according to claim 1, wherein, the number of the at least two extension portions is 2 to 6.

3. The battery according to claim 1 or 2, wherein, the case (2) comprises a case body (21) and an upper cover (22); the case body (21) is arranged with the at least two extension portions; the upper cover (22) is disposed at an end surface of each jellyroll (1).

4. The battery according to claim 3, further comprising two current collector plates arranged inside the case (2);

wherein, a plane on which an end face of each of the two current collector plates is located is parallel to a plane on which an end face of the upper cover (22) is located; the two current collector plates are a first current collector plate (3) and a second current collector plate (5); the first current collector plate (3) is disposed at an end of the jellyroll (1) and is welded to a tab arranged on the end of the jellyroll (1), and the second current collector plate (5) is disposed at the other end of the jellyroll (1) and is welded to another tab arranged on the other end of the jellyroll (1).

5. The battery according to claim 4, wherein, a pole (25) is arranged on the upper cover (22); one of the two current collector plates that is disposed near the upper cover (22) is welded to the pole (25).

6. The battery according to claim 5, wherein, the one of the two current collector plates disposed near the upper cover (22) is arranged with a protrusion, protruding towards the pole (25); and the protrusion is welded with the pole (25).

7. The battery according to claim 4, wherein, one of the two current collector plates disposed away from the upper cover (22) has a vertical edge; and the vertical edge is welded with a side wall of the case body (21).

8. The battery according to claim 7, wherein, a length H of the vertical edge is in a range of

$$0.5\text{mm} \leqslant H \leqslant 2\text{mm}.$$

9. The battery according to claim 6, wherein, a thickness T of the protrusion is in a range of

$$0.1 \text{ mm} \leqslant T \leqslant 0.6 \text{ mm}.$$

10. The battery according to any one of claims 1 to 9, wherein, the at least two jellyrolls (1) that are disposed in one case (2) are connected to each other in parallel.

11. The battery according to any one of claims 4 to 9, further comprising a cap (6), wherein, the case body (21) has two openings at two ends thereof, respectively; the cap (6) covers a side of the case body (21) away from the upper cover (22) and covers a respective one of the two openings; the first current collector plate (3) is disposed near the upper cover (22); the second current collector plate (5) is disposed near the cap (6); a side of the cap (6) facing towards the second current collector plate (5) is arranged with a reinforcing rib (61); the reinforcing rib (61) at least partially abuts against the second current collector plate (5).

12. The battery according to claim 11, wherein, a gap is defined between the second current collector plate (5) and a portion of the cap (6) that is not arranged with the reinforcing rib; and a distance D of the gap is in a range of 0.2 mm ≤ D ≤ 0.7 mm.

13. The battery according to claim 11, wherein a side of the cap (6) away from the second current collector plate (5) is arranged with an explosion-proof mark.

14. The battery according to claim 13, wherein, a thickness of a portion of the cap (6) arranged with the explosion-proof mark is in a range of 0.05mm to 0.12mm.

15. A battery pack, comprising a plurality of batteries, wherein, each of the plurality of batteries according to any one of claims 1 to 14; and the plurality of batteries are arranged in a plurality of columns, and batteries in adjacent two columns of the plurality of columns are spaced apart from each other.

FIG. 1

2

25

24

23

22

21

FIG. 2

2

22

25

FIG. 3

FIG. 4

6

FIG. 5

FIG. 6

laser beam

22

7   25

21

FIG. 7

5

laser beam

21

FIG. 8

FIG. 9

FIG. 10

FIG. 11